# EUROPEAN PATENT APPLICATION

(11) **EP 4 553 451 A1**
(43) Date of publication of application: **14.05.2025**
(21) Application number: 23209326.0
(22) Date of filing: 13.11.2023
(51) Int. Cl.: G01C 21/20, B63B 49/00, G08G 3/02

(54) **ASSISTING AN OPERATOR OF A VESSEL TRAVELLING ALONG A ROUTE**

(71) Applicant: ABB SCHWEIZ AG, 5400 Baden (CH)
(72) Inventor: BRORSSON, Emmanuel, 724 69 Västerås (SE); MAN, Yemao, 171 55 Solna (SE); BJORNDAL, Petra, 645 52 Strängnäs (SE); HJUKSE, Ola, 3033 Drammen (NO); COLLING, Alina, 0578 Oslo (NO); PELTONIEMI, Niklas, 00240 Helsingfors (FI)
(74) Representative: Kransell & Wennborg KB

(57) **Abstract**

The invention relates to a method for assisting an operator of a vessel, an operator assisting device and a vessel comprising such an operator assisting device. The device obtains (S100) a current position of the vessel during a current passage along a route, obtains (S110, S120) weather data and traffic data at the current position; obtains (S130) data about a previous passage of the vessel along the route, which previous passage is a passage having a first previous position along the route that corresponds to the current position, for which first previous position the route has the same or similar weather conditions as weather conditions of the obtained weather data and has the same or similar traffic conditions as traffic conditions of the obtained traffic data; and displays (S140) the vessel at the first previous position of the previous passage together with the traffic conditions of this passage.

## Description

### TECHNICAL FIELD

The invention relates to a method for assisting an operator of a first vessel travelling along a route, an operator assisting device as well as a vessel comprising such an operator assisting device.

### BACKGROUND

There is a trend towards allowing an automation system of a vessel to handle certain navigation tasks on it's own, which allows an officer to be "hands-off', as well as "eyes-off at times." However, the navigator will still be required to be aware of the situation, even though he or she can have his or her eyes away from the surroundings at times. This creates a need for a possibility to quickly catch up on the situation when returning from "eyes-off' to "eyes-on". For voyages that have longer sections of open sea, such as for cargo vessels, the near future will involve a decreased need for the officer to be around the center console, or at the bridge at all during certain parts of the voyage. However, when returning, the officer will need a way of catching up on potentially important information that emerged while being away.

A parallel problem exists regarding lack of decision support of what manoeuvring strategies to apply in unfamiliar or uncertain situations. Currently, officers on the bridge support each other in deciding the best strategies, for example a docking procedure during strong wind. However, if this support is lacking or if officers lack experience of how to handle the situation, they have to rely on their own estimations.

Furthermore, it is known to record and store data about a vessel being operated, such as automatic radar plotting aid (ARPA) and Automatic Identification System (AIS) data.

For instance, Avenca has the products MADAS (Marine Accident Data Analysis Suite), Incident Replay and Analysis and VDR Data Capture System (VDCS), where VDR is an abbreviation for Voyage Data Recorder. All these products seem to be directed towards collecting data during a trip and using it later for analysing incidents after they occur.

US 2018/0063467 discloses as replay functionality, where one or more parts of a trip made by a ship can be replayed on a remote server.

US 2014/0337369 discloses that a route with waypoints is stored as reference activity data to a service server. The same route with similar waypoints may be trained by a user on a sailing boat using a user apparatus. The user may select from the service server a set of reference activity data items for a certain route, where the selected reference data items may comprise reference data associated with preferred reference environmental data. The user may use for example weather forecasts to download such reference activity data items that correspond to the forecasted wind for the trained route. Such data items may be stored before training. In a training session, the user apparatus may then use the closest available reference activity data item in view of the environmental data for comparing to current activity data. Thus the user may receive valuable real-time feedback of the sailing boat performance compared to the reference performance of the sailing boat captured by a world champion, for example.

CN 111047911 in turn discloses acquiring electronic chart information from a current position of a current ship to a preset target port sea area, and displaying a current ship route and current navigation information on the electronic chart; acquiring historical marine accident information of a sea area in a preset range of the current route; judging whether the current ship route passes through the historical marine accident area; if the current ship route passes through the historical marine accident area, displaying a first part of the ship route in the historical marine accident area by using a first warning color, and displaying in the electronic chart; and judging whether a distance between the current position of the current ship and the first part of the ship route is smaller than a first threshold value, if so, carrying out first early warning prompt, and displaying accident information.

US 2017/0052029 in turn discloses displaying a track density distribution.

US 2014/0337369, CN 111047911 and US 2017/0052029 all describe various way in which the decision making on a vessel can be assisted. However, it is of interest to allow the decision making to be improved even further.

### SUMMARY

One object of the invention is therefore to assist an operator of a first vessel travelling along a route in the operation of the vessel.

This object is according to a first aspect achieved through a method for assisting an operator of a first vessel travelling along a route, the method being performed by an operator assisting device and comprising:
obtaining a current position of the first vessel during a current passage along the route,
obtaining weather data at the current position;
obtaining traffic data at the current position;
obtaining data about a previous passage of the first vessel along the route, which previous passage is a passage having a first previous position along the route that corresponds to the current position, for which first previous position the route has the same or similar weather conditions as weather conditions of the obtained weather data and has the same or similar traffic conditions as traffic conditions of the obtained traffic data; and
displaying the first vessel at the first previous position of the previous passage of the route together with the traffic conditions of the previous passage.

The object is according to a second aspect achieved through an operator assisting device comprising a processor operative to:
obtain a current position of the first vessel during a current passage along the route,
obtain weather data at the current position;
obtain traffic data at the current position;
obtain data about a previous passage of the first vessel along the route, which previous passage is a passage having a first previous position along the route that corresponds to the current position, for which first previous position the route has the same or similar weather conditions as weather conditions of the obtained weather data and has the same or similar traffic conditions as traffic conditions of the obtained traffic data; and
display the first vessel at the first previous position of the previous passage of the route together with the traffic conditions of the previous passage.

The object is according to a third aspect achieved through a vessel comprising the operator assisting device according to the second aspect. The vessel may additionally comprise a first sensor operable to obtain the weather data and a second sensor operable to obtain the traffic data.

The vessel may additionally comprise a vessel control device operative to provide a vessel control function, which vessel control function is configured to apply vessel operations commands associated with the previous passage in the operation of the first vessel along the current passage of the route. This application of vessel operations commands may be made after an acceptance made by the operator and may additionally be made from the current position towards an end of the route.

The displaying of the first vessel at the first previous position of the previous passage of the route together with the traffic conditions of the previous passage may be made on a display of a chart depicting at least a part of the route.

The obtaining of data about a previous passage of the first vessel along the route and the displaying of the first vessel at the first previous position of the previous passage of the route together with the traffic conditions of the previous passage may additionally be made based on a selection of an operator to enter an assistance mode. The obtaining of data about a previous passage of the first vessel along the route and the displaying of the first vessel at the first previous position of the previous passage of the route together with the traffic conditions of the previous passage may thereby be made in an assistance mode.

According to one variation, the obtaining of data about a previous passage is based on a matching of the weather data and traffic data of the current position to weather data and traffic data of the previous passage.

The weather data may comprise data about wind conditions such as wind speed and/or wind direction and the traffic data may comprise data about traffic conditions such as other vessels moving around the first vessel.

The matching of the weather data and traffic data may comprise selecting a passage for which the weather conditions of the obtained weather data and of the previous passage are the most similar and the traffic conditions of the obtained traffic data and the previous passage are the most similar.

The matching may involve determining a match if the wind speed of the first previous position is the same or differs from the wind speed of the current position within a defined wind speed difference margin and the wind direction of the first previous position is the same or differs from the wind direction of the current position within a defined angular wind direction difference margin.

The matching may additionally involve determining a match if the same number of surrounding vessels are within a defined maximum allowed distance from the current and first previous positions. It is additionally possible that the surrounding vessels are at the same or similar relative positions in relation to the position of the first vessel with the same or similar headings and speed. A similar relative position may be a position that is within a distance difference margin and an angular difference margin. The headings may differ with a predefined angular heading difference margin and the speed may be within a predefined speed difference margin.

It is also possible that the operator assisting device selects a number of previous passages that are most similar to the current passage and allows the operator to select one or more of these for being displayed.

According to another variation, the displaying comprises displaying the first vessel of the current passage at the current position together with the first vessel of the previous passage at the first previous position.

In this case it is additionally possible that the displaying is made on a chart depicting at least a part of the route comprising the current position with other positions in the direction towards the end of the route. It is also possible that the end of the route is being displayed.

Furthermore, the displaying may additionally comprise displaying movement of the first vessel of the previous passage from the first previous position towards an end of the route.

The data of the previous passage may comprise vessel operations data associated with the previous passage.

In this case the method may further comprise presenting at least some of the vessel operations data to the operator and the operator assisting device may be further operable to present at least some of the vessel operations data to the operator.

The presenting may be done through displaying the vessel operations data. However, other modes of presentation are possible, such as audio.

The vessel operations data may comprise heading and/or speed. The vessel operations data may additionally comprise changes in heading and/or speed.

In this case the presenting of the vessel operations data may comprise presenting previous positions along the route from the first previous position towards the end of the route where the changes in position and/or speed occur.

Furthermore, the data of the previous passage may be fetched from a database and the data obtained at the current position may be stored in the database linked to the current passage.

Furthermore, each passage along the route may be a time-series to which the weather data, traffic data and vessel operations data is correlated.

The previous passage may additionally be a passage where the first vessel successfully reached the destination without any incidents. There may not have been any incidents in the passage along the previous route, at least between the current position and a point of destination.

It should be emphasized that the term "comprises/comprising" when used in this specification is taken to specify the presence of stated features, steps or components, but does not preclude the presence or addition of one or more other features, steps, components or groups thereof.

### BRIEF DESCRIPTION OF THE DRAWINGS

The invention will now be described in more detail in relation to the enclosed drawings, in which:
fig. 1 schematically shows a first way of realizing an operator assisting device,
fig. 2 shows a computer program product in the form of a CD ROM with computer program code used to implement the operator assisting device,
fig. 3 schematically shows a first vessel comprising the operator assisting device,
fig. 4 schematically shows a chart with the first vessel travelling along a route during which weather and traffic data is obtained,
fig. 5 shows a flow chart of a number of method steps in a first embodiment of a method of assisting an operator of the first vessel,
fig. 6a and 6b show display views of the first vessel and two other vessels during a previous passage along the route,
fig. 7 shows a flow chart of a number of method steps in a second embodiment of the method of assisting the operator of the first vessel, and
fig. 8a and 8b show display views of the first vessel during the current and a previous passage along the route.

### DETAILED DESCRIPTION

In the following description, for purposes of explanation and not limitation, specific details are set forth such as particular architectures, interfaces, techniques, etc. in order to provide a thorough understanding of the invention. However, it will be apparent to those skilled in the art that the invention may be practiced in other embodiments that depart from these specific details. In other instances, detailed descriptions of well-known devices, circuits and methods are omitted so as not to obscure the description of the invention with unnecessary detail.

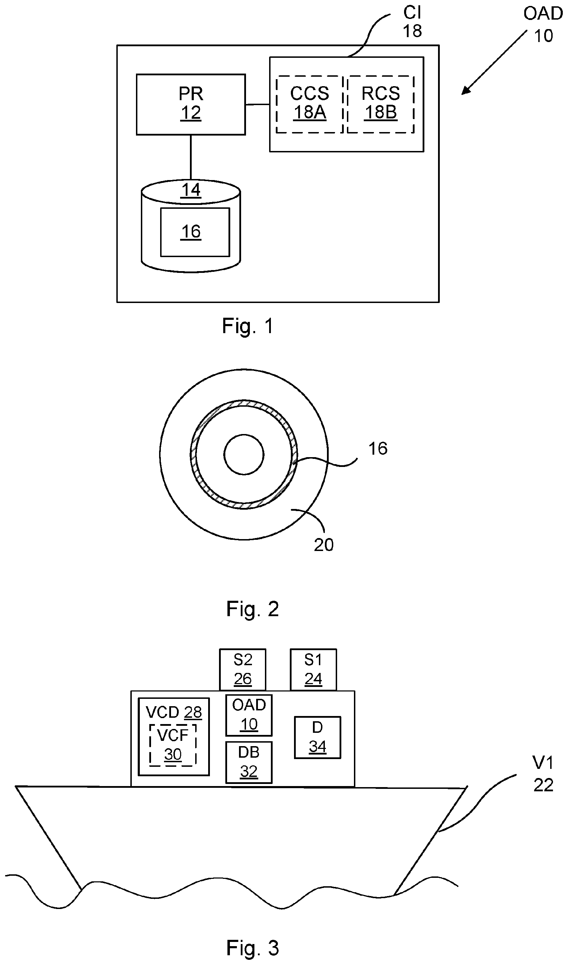

Fig. 1 schematically shows one realization of an operator assisting device OAD 10. In the present example, the operator assisting device 10 comprises a processor PR 12 and a data storage 14 with computer program instructions 16 that, when executed by the processor 12, implements an operator assisting function. There is also a communication interface CI 18. The communication interface 18 may have a computer communication section CCS 18A and/or a radio communication section RCS 18B, where the computer communication section 18A may be an Ethernet interface for connection to a local area network (LAN) for instance a LAN provided in a vessel and the radio communication section 18B may comprise a transceiver for transmission and reception of radio signals. It should be realized that it is possible that the communication interface 18 only comprises the radio communication section 18B and not the computer communication section 18A or vice versa.

The operator assisting device 10 may thus comprise a processor 12 with associated program memory 14 including computer program code 16 for implementing the operator assisting function.

A computer program may also be provided via a computer program product, for instance in the form of a computer readable storage medium or data carrier, like a CD ROM or a memory stick, carrying such a computer program with the computer program code, which will implement the operator assisting function when being loaded into a processor. One such computer program product in the form of a CD ROM 20 with the above-mentioned computer program code 16 is schematically shown in fig. 2.

The operator assisting device 10 may with advantage be provided in a vessel.

Fig. 3 schematically shows a first vessel V1 22 comprising the operator assisting device OAD 10. As can be seen in the figure the first vessel 22 also comprises a first sensor S1 24, a second sensor 26, a vessel control device VCD 28 that implements a vessel control function VCF 30, a database DB 32 with historical vessel data and a display D 34. The computer communication section of the previously described communication interface may here be used for communicating with the vessel control device 28, the first and second sensors 24, 26, the database 32 and the display 34. For this reason these may all be connected to a LAN. In one variation, the database 32 is provided on land, in which case the radio communication section of the communication interface may be used for communication with it.

The first sensor 24 may be a sensor for sensing weather conditions around the first vessel 22. Thereby the first sensor 24 may be a wind sensor that senses the speed and/or direction of the wind. The second sensor 26 may be a sensor sensing surrounding traffic, such as an automatic identification system (AIS) transceiver. Alternatively, it can be a radar or a Lidar.

There may also be sensors for sensing the vessel position, heading and speed. Alternatively vessel position, heading and speed may be obtained from the vessel control device 28 together with other vessel operations data such as data about when a change of heading and speed is made and data about commands effecting such change.

Aspects of the present disclosure are directed towards assisting an operator of the first vessel to operate the first vessel during a passage of the vessel along at least a part of a route.

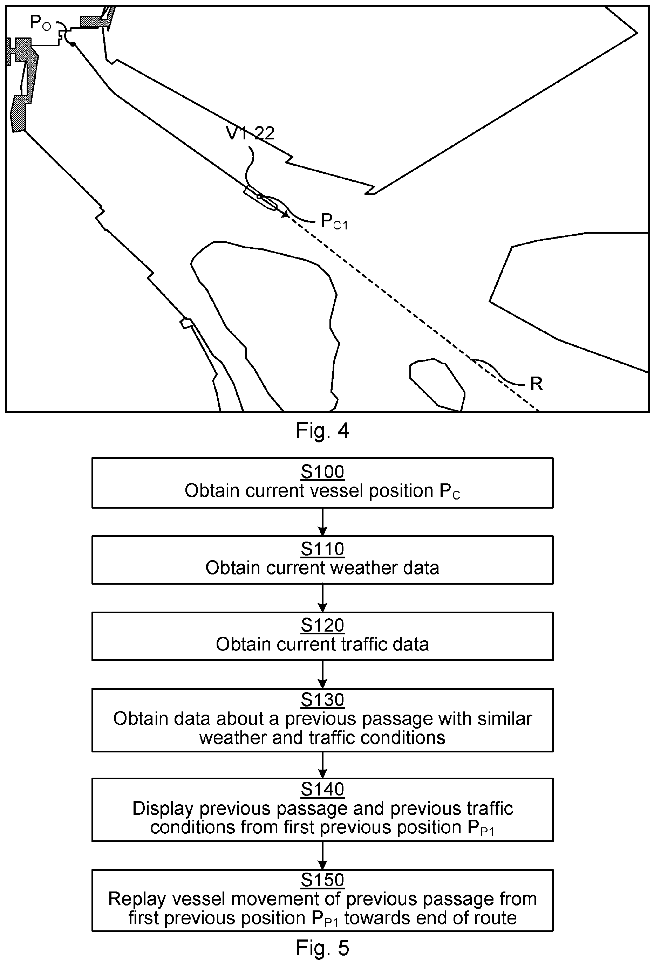

Fig. 4 shows an exemplary chart in which the first vessel 22 travels along a route R from a point of origin Po to a point of destination (not shown).

As can be seen in fig. 4, the first vessel 22 is travelling along the route R, which travelling is made in a current passage of the first vessel 22 along the route R. In this current passage, the first vessel 22 starts at the point of origin Po of the route R and then continues towards the point of destination (not shown). The point of origin Po may with advantage be a point in a first harbour and the point of destination may be a point in a second harbour. In the example in fig. 4, the first vessel 22, after leaving the first harbour, passes through a strait between an island and a part of the mainland before it enters more open waters. As it passes through the strait it has a first current position P_{C1}. It also moves with a heading and a speed. The speed and heading of the first vessel 22 is indicated through a vector.

During this trip the operator assisting device 10 collects data, such as wind data from the first sensor 24 and traffic data from the second sensor 26. It also collects vessel operations data, such as position data, heading data and speed data. The vessel operations data may also comprise data about commands used by the vessel control device 28 to effect these changes. The vessel operations data may be collected by the operator assisting device 10 from the vessel control device 28. The operator assisting device 10 may then store this data for the current passage of the route in the database 32. The traffic data and the vessel operations data may more particularly be stored linked to the position along the current passage of the route R where it was obtained. In the example of fig. 4, wind data, traffic data and vessel operations data are collected at the first current position P_{C1} and stored linked to this first current position of the current passage in the database 32.

Thus, the position and movement of surrounding other vessels, movement of the first vessel, wind conditions and other data points are continuously recorded and stored locally, where the recording may be done continuously.

In one variation a new recording may overwrite older recordings that were not manually saved, similar to an automobile dash camera. Furthermore, parts of the recordings can be chosen to be saved separately and thus not overwritten. It is thus possible to save only parts of a passage along a route such as in areas where navigation is hard, like in narrow straits or at an end point of the route where docking needs to be made.

Furthermore, the first vessel 22 may additionally have travelled along the route R several times before. The first vessel 22 may thus have travelled along the route R more than one time earlier, which may, for instance, be the case if the route R is more or less fixed. This can be the case when the first vessel 22 is a ferry or perhaps a cruise ship. During these previous trips, the operator assisting device 10 may have collected the above-mentioned data at various positions along the route R and stored it in relation to the positions and the passage in question. Thereby a historical database of passages along the route may be built up and stored in the database 32. To each position of a passage along the route there is then linked wind data, traffic data as well as vessel operations data.

Each passage along the route R may be stored as a time-series, where the collected weather data, traffic data and vessel operations data are linked or correlated to the time-series through being linked or correlated with a corresponding position along the route R and a corresponding point in time of the time series. For each passage, there may thus be a series of vessel positions. Each vessel position of the series is associated with a corresponding point in time and these positions are correlated with the weather data, traffic data and vessel operations data being obtained at them. Also a vessel heading may be associated with the position and point in time. The historic data may be accessed by the operator assisting device via the communication interface 18 in order to assist an operator during the operation of the first vessel.

During the current passage along the route, it may be of advantage to an operator of the first vessel 10 to view a previous passage along the route R where similar conditions were faced. This may be of interest if for instance the vessel is to dock in the second harbour.

An operator operating the first vessel may thus get assistance during a current passage along the route through using the operations assisting device 10.

How this can be done according to a first embodiment will now be described with reference being made to fig. 5, which shows a number of method steps in a method of assisting the operator being performed by the operator assisting device 10.

At a current position Pc of the first vessel 22 along the route R, the operator assisting device 10 obtains the current vessel position Pc, S100, obtains current weather data, S110, and obtains current traffic data S120. The position may be received from a position sensor. Alternatively, it may be received from the vessel control device 28. The current weather data may comprise data of the current wind speed and direction at the current vessel position obtained via the first sensor 24 and the current traffic data may comprise data about other vessels in relation to the current vessel position Pc obtained via the second sensor 26, for instance the current positions of other vessels in relation to the current position Pc and the heading and perhaps also speed of these other vessels, i.e. the current relative positions to the first vessel 10 together with the headings and optionally also speeds.

As can be seen above, the operator assisting device 10 has access to a history of data associated with positions along the route R, where this data comprise weather data measurements made at these positions, at the current point, data about other vessels around these positions and vessel operations data at these positions. The weather data comprises data about the weather conditions at the current point Pc and the traffic data comprise data about traffic conditions at the current point Pc. According to aspects of the present disclosure, this data is used for assisting the operator of the first vessel 10.

The operator may additionally select to enter an assistance mode.

In the assistance mode the operator assisting device 10 then obtains data about at least one previous passage along the route R based on the current vessel position, the current weather data and the current traffic data. Based on the data collected at the current position Pc, the operator assisting device 10 thereby obtains data about at least one previous passage along the route R, S130, which previous passage is a passage having a first previous position along the route that corresponds to the current position Pc, for which first previous position the route R has the same or similar weather conditions as the weather conditions of the obtained weather data and has the same or similar traffic conditions as the traffic conditions of the obtained traffic data. The weather data may comprise data about wind conditions such as wind speed and/or wind direction and the traffic data may comprise data about traffic conditions such as other vessels moving around the first vessel.

The operator assisting device 10 thus selects at least one previous passage along the route R, which previous passage may be a passage that for a first previous position along the route corresponding to the current position Pc of the first vessel 22 has the same or similar weather conditions and/or the same or similar traffic conditions. More particularly, the data of the previous passage may be fetched from the database 24.

Thereby, the obtaining of data about a previous passage may be based on a matching of the weather data and traffic data of the current position to weather data and traffic data of the previous passages.

The previous passage may additionally be a passage where the first vessel successfully reached the point of destination of the route without any incidents. There may not have been any incidents in the passage along the previous route, at least between the first previous position and the point of destination. The first vessel may above all not have been involved in any accidents at least between the first previous position and the point of destination. The previous passage may thus be a successful passage along the route, at least from the first previous position to the point of destination.

The matching of the weather data and traffic data may comprise selecting a passage for which the weather conditions of the obtained weather data and of the previous passage are the most similar and the traffic conditions of the obtained traffic data and the previous passage are the most similar. The matching may involve determining a match if the previous wind speed is the same or differs from the current wind speed within a defined wind speed difference margin and the previous wind direction is the same or differs from the current wind direction within an angular wind direction difference margin.

The matching may additionally involve determine a match if the same number of surrounding vessels are within a maximum allowed distance from the current and first previous positions. It is additionally possible that the surrounding vessels are at the same or similar relative positions in relation to the current and first previous position of the first vessel with the same or similar headings and speed. A similar relative position may be a position that is within a distance difference margin and an angular difference margin. The headings may differ with an angular heading difference margin and the speed may be within a speed difference margin.

It is also possible to select a number of the passages that are most similar to the current passage and allow the operator to select one or more of these for being displayed. The operator may thus select one or more of the passages for being displayed.

A previous passage and previous traffic conditions of this passage are then displayed by the operator assisting device 10 on the display 34, which displaying may be started from the first previous position, S140.

When displaying a previous passage, the operator assisting device 10 may additionally provide indications of the wind speed and direction on the display 34.

Moreover, in the assistance mode the operator assisting device 10 may allow the operator to replay vessel movement of the previous passage on the display 34 from the first previous position P_{P1} towards the end of the route, S15\0. This displaying thus involves displaying movement of the first vessel 10 of the previous passage from the first previous position towards an end of the route.

In this case it is also possible that various vessel operations data is being presented when the vessel is at a corresponding previous vessel position. At least some of the vessel operations data is thus presented to the operator. The presented vessel operations data may comprise heading and/or speed which may be coded into a vector displayed together with the vessel.

The vessel operations data may additionally comprise changes in heading and/or speed. In this case the presenting of the vessel operations data may comprise presenting previous positions along the route from the first previous position towards the end of the route where the changes in position and/or speed occur. It is for instance possible that when there is a change in operation made at a previous position, then this change is presented when the vessel is moved past this previous position. The presenting may be a displaying. However, also other ways are possible such as using sounds like speech or audio.

The previous passage may thus be displayed together with the previous traffic data, which displaying may be made starting from the first previous position towards an end of the route. The displaying may additionally be made on a chart depicting at least a part of the route comprising the current position with other positions in the direction towards the end of the route. It is also possible that the end of the route is being displayed.

As was mentioned above, the user may also select to replay the vessel movements of the previous passage from the first previous position towards the end of the route.

Thereby it is possible for the operator to see what was done at the first previous position, which corresponds to the current vessel position, during similar weather and traffic conditions.

For replaying a situation, the operator assisting device 10 may reproduce the situation as it was played out, meaning that the appropriate data sources of radar signals, AIS, radio traffic, and various data points for the first vessel 22 such as speed, position and course could be presented, for instance displayed. The operator assisting device 10 may also provide the ability to select the speed of the replay as well as have the ability to browse to specific points in time using a slider or similarly. A possibility is also for the operator assisting device 10 to label various parts of the replayed situation, such as points in time where manoeuvres of the first vessel 22 were implemented or where radio messages were received.

It may also be possible to simulate the movement of the first vessel 22 forwards from the current position based on a previous passage. The user may also have the ability to browse different situations that matches the current conditions, for example from a list of docking procedures for the second harbour where the wind conditions were the same.

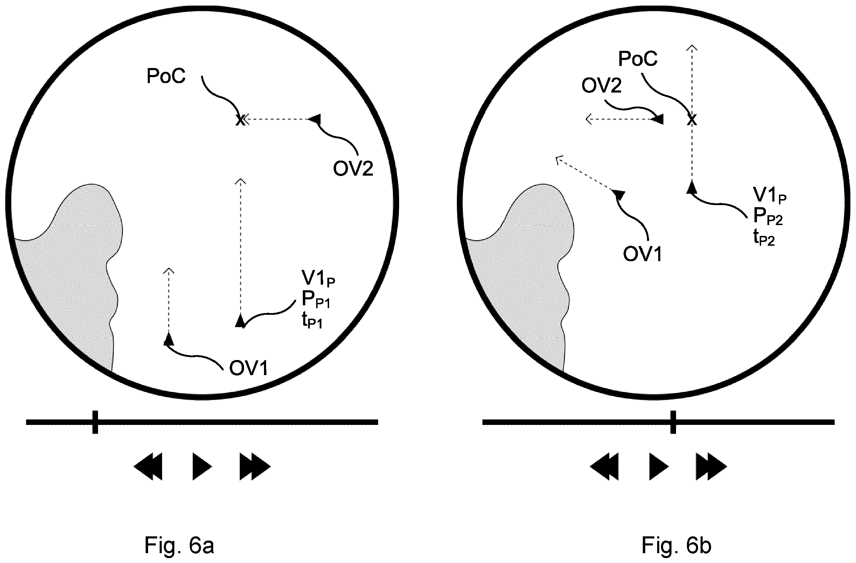

An example of displayed information concerning the previous passage at a first previous position P_{P1} corresponding to the current position is shown in fig. 6a and 6b, where fig. 6a shows a first and second other vessel OV1, OV2 that could become problematic to the first vessel V1_{P} at the first previous position P_{P1} and a first previous point in time tₚ₁, where the second other vessel OV2 can be seen as crossing the path of the first vessel at a point of crossing PoC and the first other vessel OV1 taking a parallel path with the possibility that it could cross the path of the first vessel 20. However, when replaying the run of the first vessel V1_{P} when it moves from the first previous position P_{P1} to a second previous position P_{P2} at a second previous point in time tₚ₂, it can be seen that the second other vessel OV2 crossed the path well before the first vessel will reach the point of crossing PoC and that the first other vessel OV1 made a turn away from the path of the first vessel V1_{P}. Thereby the operator could see that if a first and second similar other vessels with similar paths to the paths of the first and second other vessels OV1, OV2 were present at the current position of the current passage along the route, and if the direction and speed of the historic previous passage would be selected, then also the current passage would be safe.

If the operator finds the displayed path of the first vessel 22 during the previous passage to be acceptable, he or she may additionally allow vessel operations commands associated with the previous passage to be used in the operation of the first vessel 22 along the current passage of the route. After his allowing of their use, they may be automatically applied in the control of the first vessel 22. This application of vessel operations commands may thus be made after an acceptance made by the operator and may additionally be made from the current position towards an end of the route. In this way the operator may allow the vessel control device 28 to use the vessel operations commands that were used for controlling the first vessel during the previous passage.

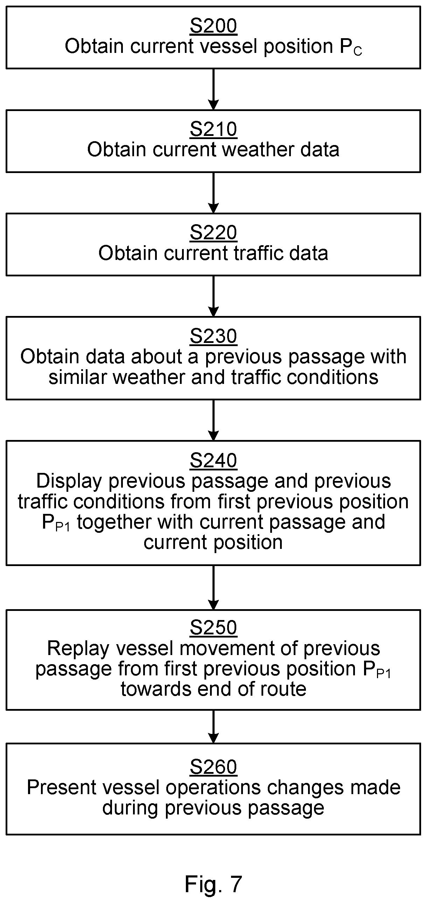

A second embodiment will now be discussed with reference being made to fig. 7, which shows a flow chart of a number of steps in the method of assisting an operator of the first vessel being performed by the operator assisting device 10.

As the first vessel 22 travels along the route R during the current passage of the route R, the operator assisting device 10 again continually obtains a current vessel position, S200, current weather data, S210, and current traffic data, S220, which may be done in the same way as in the first embodiment.

The operator may additionally select to enter an assistance mode.

In the assistance mode the operator assisting device 10 then obtains data about a previous passage with similar weather and traffic conditions based on the current vessel position, the current weather data and the current traffic data, S230. This may involve selecting at least one previous passage along the route, which previous passage is a passage that for a first previous position along the route corresponding to the current position has the same or similar weather conditions and traffic conditions. The selection could here be made in the same way as in the first embodiment. Furthermore, the data of the previous passage may be fetched from the database 24.

The previous passage may also here be a passage where the first vessel successfully reached the destination of the route without any incidents. There may thus not have been any incidents in the passage along the previous route, at least between the first previous position and a point of destination. The previous passage may thus be a successful passage along the route, at least from the first previous position to the point of destination.

The previous passage and previous traffic conditions are then displayed by the operator assisting device 10 on the display 34 from the first previous position. However, in this case the previous passage and the previous traffic conditions are displayed together with the display of the first vessel at the current position of the current passage, S240. For instance, the previous passage and previous traffic conditions may be displayed overlaid the display of the first vessel at the current position of the current passage. Also in this case, it is possible that the displaying is made on a chart depicting at least a part of the route comprising the current position with other positions in the direction towards the end of the route. It is also possible that the end of the route is being displayed.

It is again possible that indications of the wind speed and direction are indicated on the display. Moreover, also in this embodiment the operator assisting device 10 allows the operator to replay vessel movement of the previous passage on the display 34 from the first previous position towards the end of the route, S250. There is thus a displaying of movement of the first vessel of the previous passage from the first previous position towards the end of the route. In this case also at least some of the vessel operations data is being presented when the vessel is at a corresponding previous vessel position. The vessel operations data may comprise heading and/or speed, which may be shown using a vector. Additionally or instead, it is possible that the displayed vessel operation data comprise changes in heading and/or speed.

In this case the presenting of the vessel operations data may comprise presenting previous positions along the route from the first previous position towards the end of the route where the changes in position and/or speed occur.

The operator assisting device 10 thus presents vessel operations changes made during the previous passage to the operator, S260. Thereby, when there is a change in operation made at a previous position this change is presented when the vessel is moved past the previous position. Alternatively, the actual path taken by the first vessel may be displayed.

Also here it is possible to reproduce the situation as it was played out through presenting the appropriate data sources as well as to select the speed of the replay, browsing of specific points in time and labelling various parts of the replayed situation.

It may also be possible to simulate the movement of the first vessel forwards from the current position based on a previous passage. The user may also have the ability to browse different situations that matches the current conditions, for example from a list of docking procedures for the second harbour where the wind conditions were the same.

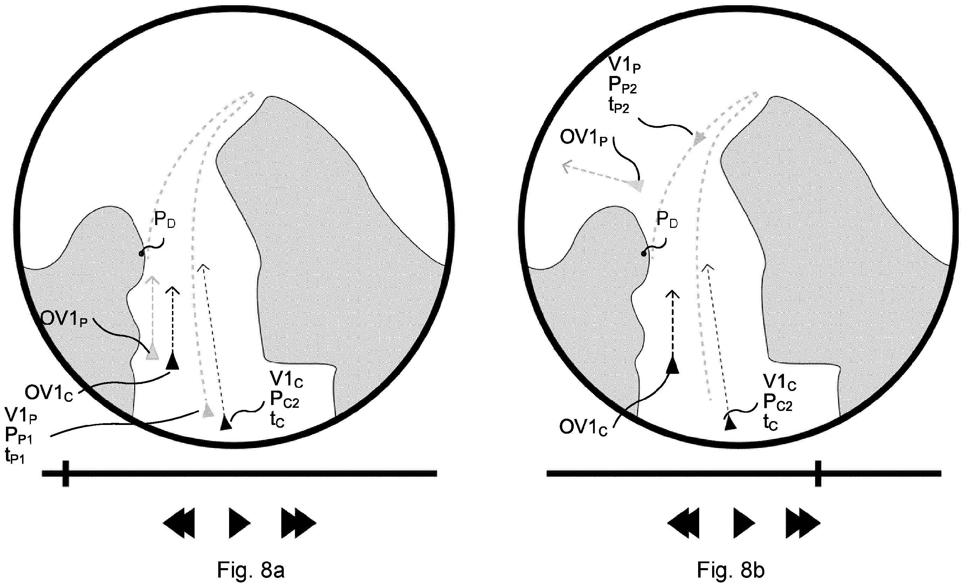

Fig. 8a and 8b show an example where there is one other vessel OV1 surrounding the first vessel V1. The traffic conditions are thus such that there is one other vessel nearby the first vessel in the current and the selected previous passage.

Fig. 8a shows how the first vessel V1_{P} of the previous passage is shown at a first previous position P_{P1} adjacent the vessel V1_{C} of the current passage at the corresponding current vessel position and current point in time tc, where the current vessel position in this case is a second current vessel position P_{C2} at a first previous point in time t_{P1}. The path taken by the vessel V1_{P} in the previous passage towards a point of destination P_{D} is also indicated. Also a first other vessel OVic close to the first vessel V1_{C} during the current passage and the first other vessel OV_{1P} close to the first vessel V1_{P} during the previous passage are shown, which positions are the positions at the current and first previous points in time, respectively. It can be seen that the first other vessel OVic has a path that can cross the path of the first vessel V1_{C}.

If the operator now replays the movement of the first vessel along this previous path, as is shown in fig. 8b, the first vessel V1_{P} will move along the path to a second previous position P_{P2} at a second previous point in time t_{P2}. Also the path taken by the first vessel, including the changes in heading, are being displayed. It can also be seen that the first other vessel OV1_{P} made a turn away from the path of the first vessel V1_{P} and no longer poses a risk to cross the path of the first vessel.

From the example the operator can get information about how to safely dock at the point of destination when there are difficult weather and traffic conditions. The operator can also see that the first other vessel should pose no problem.

If the operator finds the displayed path of the first vessel during the previous passage to be acceptable, he or she may additionally allow vessel operations commands associated with the previous passage to be used in the operation of the first vessel along the current passage of the route. This application of vessel operations commands may thus be made after an acceptance made by the operator and may additionally be made from the current position towards an end of the route. In this way the operator may allow the vessel control device to reuse the vessel operations commands that were used for controlling the first vessel during the previous passage.

The invention may be varied in a number of ways. Therefore, while the invention has been described in connection with what is presently considered to be most practical and preferred embodiments, it is to be understood that the invention is not to be limited to the disclosed embodiments, but on the contrary, is intended to cover various modifications and equivalent arrangements. Therefore, the invention is only to be limited by the following claims.

## Claims

1. A method for assisting an operator of a first vessel travelling along a route (R), the method being performed by an operator assisting device (10) and comprising:
obtaining (S100, S200) a current position (Pc, P_{C1}, P_{C2}) of the first vessel (22) during a current passage along the route (R),
obtaining (S110; S210) weather data at the current position;
obtaining (S120; S220) traffic data at the current position;
obtaining (S1300; S230) data about a previous passage of the first vessel (V_{1P} ) along the route (R), which previous passage is a passage having a first previous position (P_{P1}) along the route that corresponds to the current position (P_{C2}), for which first previous position (V1_{P}) the route (R) has the same or similar weather conditions as weather conditions of the obtained weather data and has the same or similar traffic conditions as traffic conditions of the obtained traffic data; and
displaying (S140, S240) the first vessel (V_{1P} ) at the first previous position (P_{P1}) of the previous passage of the route together with the traffic conditions of the previous passage.

2. The method as claimed in claim 1, wherein the obtaining of data about a previous passage is based on a matching of the weather data and traffic data of the current position (P_{C2}) to weather data and traffic data of the previous passage.

3. The method according to claim 1 or 2, wherein the displaying comprises displaying (S240) the first vessel (V1_{C}) of the current passage at the current position (P_{C2}) together with the first vessel (V1_{P}) of the previous passage at the first previous position (P_{P1}).

4. The method as claimed in any previous claim, wherein the displaying comprises displaying (S140; S240) movement of the first vessel (V_{1P} ) of the previous passage from the first previous position (P_{P1}) towards an end of the route (P_{D}).

5. The method as claimed in any previous claim, wherein the weather data comprises data about weather conditions such as wind direction and/or wind speed and the traffic data comprises data about traffic conditions such as other vessels (OV1, OV2, OV1_{P}, OV1_{C}) moving around the first vessel (V1_{P}).

6. The method according to any previous claim, wherein the data of the previous passage comprises vessel operations data associated with the previous passage and further comprising presenting at least some of the vessel operations data to the operator.

7. The method as claimed in claim 6, wherein the vessel operations data comprises heading and/or speed.

8. The method as claimed claim 7, wherein the vessel operations data comprises changes in heading and/or speed and the presenting of the vessel operations data comprises presenting (S260) the previous positions along the route (R) from the first previous position (P_{P1}) towards the end of the route (P_{D}) where the changes in position and/or speed occur.

9. The method as claimed in any previous claim, wherein the data of the previous passage is fetched from a database (32) and further comprising storing the data obtained at the current position in the database (32) linked to the current passage.

10. An operator assisting device (10) comprising
a processor (12) operative to:
obtain a current position (Pc, P_{C1}, P_{C2}) of the first vessel (22) during a current passage along the route (R),
obtain weather data at the current position;
obtain traffic data at the current position;
obtain data about a previous passage of the first vessel (V1_{P}) along the route (R), which previous passage is a passage having a first previous position (P_{P1}) along the route that corresponds to the current position (P_{C2}), for which first previous position (V1_{P}) the route (R) has the same or similar weather conditions as weather conditions of the obtained weather data and has the same or similar traffic conditions as traffic conditions of the obtained traffic data; and
display the first vessel (V1_{P}) at the first previous position (P_{P1}) of the previous passage of the route together with the traffic conditions of the previous passage.

11. The prediction handling device (10) according to claim 10, wherein the obtaining of data about a previous passage is based on a matching of the weather data and traffic data of the current position (P_{C2}) to weather data and traffic data of the previous passage.

12. The prediction handling device according to claim 10 or 11, wherein the displaying comprises displaying (S240) the first vessel (V1c) of the current passage at the current position (P_{C2}) together with the first vessel (V1_{P}) of the previous passage at the first previous position (P_{P1}).

13. A vessel (22) comprising the operator assisting device (10) according to any of claims 10 - 12.

14. The vessel (22) according to claim 12 further comprising a first sensor (24) operable to obtain the weather data and a second sensor (26) operable to obtain the traffic data.

15. The vessel according to claim 13 or 14, further comprising a vessel control device (28) operative to provide a vessel control function (30), which vessel control function (39) is configured to apply vessel operations commands associated with the previous passage in the operation of the first vessel (22) along the current passage of the route (R).
